# FASCICULE DE BREVET EUROPEEN

(11) **EP 2 382 088 B1**
(45) Date de publication et mention de la délivrance du brevet: **07.03.2018**
(21) Numéro de dépôt: 10700970.6
(22) Date de dépôt: 07.01.2010
(51) Int. Cl.: B32B 15/08, B64D 45/02, H05K 9/00

(54) **STRUCTURE EN MATÉRIAU COMPOSITE PROTÉGÉE DES EFFETS DE LA FOUDRE**
GEGEN BLITZSCHLAGEFFEKTE GESCHÜTZTE STRUKTUR AUS EINEM VERBUNDMATERIAL
STRUCTURE MADE OF COMPOSITE MATERIAL PROTECTED AGAINST THE EFFECTS OF LIGHTNING

(30) Priorité: 09.01.2009 FR 0950106
(43) Date de publication de la demande: 02.11.2011
(73) Titulaire: European Aeronautic Defence and Space Company EADS France Airbus Group SAS, 75016 Paris (FR)
(72) Inventeur: ALIAGA, Daniel, 93300 Aubervilliers (FR); CAVALIERE, Frédérick, 78180 Montigny Le Bretonneux (FR)
(74) Mandataire: Ipside
(86) Numéro de dépôt international: PCT/EP2010/050109
(87) Numéro de publication internationale: WO 2010/079198

(56) Documents cités:
- EP-A- 1 332 867
- EP-A- 1 473 227
- EP-A- 1 767 344
- WO-A-02/24383
- GB-A- 2 433 467

## Description

La présente invention appartient au domaine des structures réalisées avec des matériaux composites. Plus particulièrement l'invention concerne des structures réalisées dans des matériaux non électriquement conducteurs ou faiblement conducteurs et susceptibles d'être soumis lors de leur utilisation à des impacts de foudre.

L'invention concerne en particulier des structures en matériau composite pour aéronefs.

Parmi les nombreuses familles de matériaux composites, la famille des composites comportant des fibres d'un matériau minéral (verre, silice, carbone...) ou organique (aramide, Kevlar® ...) maintenues dans une matrice organique dure (polyester, époxy ...) est largement mise en oeuvre pour la réalisation de structures en raison de leurs performances mécaniques, en particulier leurs résistances par rapport à la masse, et ou en raison de leurs possibilités de réaliser des formes complexes.

Ces caractéristiques et avantages sont particulièrement appréciés pour la fabrication des aéronefs et par matériau composite il convient de comprendre dans la présente demande les matériaux composites de cette famille des matériaux comportant des fibres minérales ou organiques maintenues dans une matrice organique dure.

Cependant les aéronefs en vol sont fréquemment soumis à des impacts de foudre dont l'énergie électrique est suffisante pour provoquer un endommagement local de la structure, désigné effet direct de la foudre, endommagement qui doit être évité pour des raisons évidentes d'intégrité de l'aéronef et pour des raisons de sécurité lorsque les structures concernées sont des structures devant résister à des efforts importants, dites structures travaillantes.

Pour ces raisons, il est connu de rendre électriquement conducteur les structures en matériau composite, ou d'une manière générale les structures réalisées en matériau isolant ou faiblement conducteur électriquement, c'est-à-dire trop faiblement conducteur pour être en mesure de disperser les courants induits par les impacts de foudre sans que la structure ne soit endommagée au-delà d'un niveau acceptable, sur une surface de ces structures soumise à l'écoulement aérodynamique et qui est également la surface susceptible d'être soumise à des impacts de foudre.

Pour rendre électriquement conductrice en surface une structure en matériau composite intrinsèquement isolante ou faiblement conductrice, il est connu de placer sur la surface devant être rendue conductrice des éléments métalliques conducteurs de l'électricité, ces éléments métalliques conducteurs étant reliés entre eux d'une pièce en matériau composite à une autre pièce en matériau composite ou étant reliés à une structure métallique intrinsèquement conductrice.

Ces techniques sont désignées par le terme général de métallisation qui regroupe en pratique diverses solutions.

Une première technique connue consiste à placer sur la surface de la pièce en matériau composite des bandes métalliques conductrices plus ou moins espacées reliées, par au moins une de leurs extrémités, à une masse générale de l'aéronef, et sur lesquelles viendra s'attacher la foudre en raison de leur caractère conducteur.

L'avantage de cette solution est qu'elle permet de limiter la surface couverte par le matériau conducteur tout en permettant de disposer de sections conductrices significatives pour permettre de conduire les courants de foudre et donc de conserver pour la structure en matériau composite une transparence radioélectrique.

Une telle solution de bandes dites parafoudres est avantageusement mise en oeuvre sur des radômes d'avion mais sa réalisation est délicate et présente le défaut de ne pas protéger toute la surface de la pièce en particulier lorsque la transparence radioélectrique n'est pas recherchée.

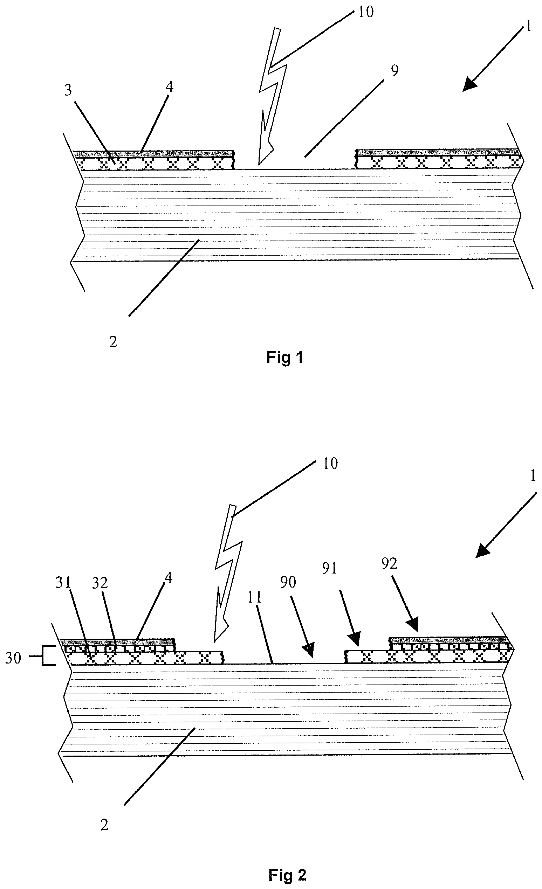

Une seconde technique connue, correspondant à l'illustration de la figure 1, consiste à recouvrir toute la surface à protéger de la structure en matériau composite 2 d'une pièce 1 par un grillage 3 réalisé dans un matériau métallique conducteur électrique.

Un tel grillage 3 est réalisé le plus souvent en bronze ou dans un alliage à base de cuivre ou dans un alliage à base d'aluminium, en particulier pour des raisons de qualité de conduction électrique, soit par un procédé conventionnel de tissage de fils soit par un procédé d'étirage à partir d'une plaque préparée pour obtenir un grillage par déploiement.

Ces grillages 3 sont déposés sur la surface de la pièce 1 suivant différentes techniques par exemple déposés à la surface de la pièce en cours de réalisation avant une étape de durcissement par polymérisation de la matrice du matériau composite 2.

Dans une étape de finition les pièces réalisées sont peintes non seulement pour des raisons esthétiques mais également pour protéger le matériau composite 2 de la pièce des agressions de l'environnement extérieur comme l'humidité ou les rayonnements ultraviolets.

Les peintures de finition 4 comportent en général de trois à six couches qui résultent en une épaisseur de 150 à 400 µm d'un matériau, la peinture 4, électriquement isolant.

Lorsqu'une pièce 1 ainsi métallisée est frappée par un impact de foudre 10, l'arc électrique perfore la couche de peinture 4 jusqu'au grillage conducteur 3 qui par conduction électrique transfère les charges électriques et le courant de foudre à la structure avant que les charges ne soient évacuées dans l'air ambiant.

Localement, à proximité immédiate du point d'impact de la foudre 10, les densités de courant dans le grillage conducteur 3 atteignent des valeurs très élevées et la température atteinte par effet joule est suffisante pour produire une évaporation du métal du grillage conducteur 3.

Cette vaporisation, qui absorbe une grande quantité de l'énergie de l'impact de foudre, a pour effet localement, dans une zone 9 à proximité de l'impact, de faire partir la peinture 4 par un effet combiné de température et de souffle et de faire disparaître le grillage conducteur 3 lui-même par vaporisation.

Cette situation est illustrée sur la figure 1 qui schématise une zone de pièce 1 en matériau composite lors d'un impact de foudre.

Des analyses de zones ayant été soumises à des impacts de foudre ont permis de constater que la zone dans laquelle le matériau de métallisation a été éliminé par vaporisation correspond à la zone pour laquelle la peinture a également été éliminée.

De ce fait il est constaté qu'après une première phase d'élimination du métal de protection dans la zone 9, le pied d'arc de foudre s'attache fréquemment sur la zone alors dépourvue de métallisation du matériau composite 2 et endommage la structure. Cet attachement du pied d'arc sur le matériau composite dépourvu de métallisation est favorisé par le fait que la peinture 4 masque le grillage conducteur restant 3 et que par conséquent, le pied d'arc ne peut pas toujours s'attacher en priorité sur le grillage conducteur 3.

Il ressort donc que la métallisation suivant les techniques connues des pièces en matériau composite procure une protection limitée qui mérite d'être améliorée pour éviter une détérioration de la structure lors des impacts de foudre.

La présente invention a précisément pour objectif de définir une pièce en matériau composite dont le comportement est amélioré lors d'impacts de foudres.

Pour cela une pièce suivant l'invention comporte une partie structurale en matériau composite comportant des fibres minérales ou organiques maintenues dans une matrice organique dure, électriquement isolant ou faiblement conducteur, et comporte sur une surface de la partie structurale, au moins sur un côté de la pièce susceptible d'être soumise à des impacts de foudre, une couche de métallisation comportant une couche d'un premier matériau métallique électriquement conducteur, dit matériau **HTV**, la couche de métallisation étant recouverte d'une peinture de protection électriquement isolante.

La couche de métallisation de la pièce comporte en outre au moins un second matériau métallique électriquement conducteur, dit matériau **BTV**, dont la température de vaporisation **Θb** est inférieure, voire très inférieure, à la température de vaporisation **Θh** du premier matériau métallique **HTV** de sorte que lors d'un impact de foudre l'échauffement local induit, par effet joule dans le premier et dans le second matériau conducteur du fait du courant de foudre, provoque par la vaporisation du second matériau métallique **BTV** une zone dans laquelle le premier matériau **HTV** n'a pas été vaporisé et cependant la peinture éliminée sous l'effet de cette vaporisation.

Cette zone restant métallisée sans peinture de protection assure une protection améliorée vis à vis de l'impact de foudre en favorisant l'attachement du pied d'arc de foudre à la métallisation en évitant de fait que le pied d'arc de foudre s'attache directement sur le matériau composite 2.

Pour obtenir une surface suffisante de la zone restant métallisée sans peinture de protection les matériaux métalliques **BTV** et **HTV** sont choisis de sorte que la température de vaporisation **Θb** est inférieure à 70 % de la température de vaporisation **Θh,** et de préférence de sorte que la température de vaporisation **Θb** est inférieure à 50 % de la température de vaporisation **Θh.**

En pratique compte tenu des températures atteintes dans une couche de métallisation lors d'un impact de foudre, avantageusement les matériaux métalliques **BTV** et **HTV** sont choisis de sorte que la température de vaporisation **Θb** est inférieure à 1250 Kelvin et la température de vaporisation **Θh** est supérieure à 2500 Kelvin de sorte que le matériau **BTV** soit vaporisé sur une surface significative.

Avantageusement pour répondre à ces conditions de températures de vaporisation tout en restant compatible de la mise en oeuvre industrielle des matériaux pour réaliser la couche de métallisation, le matériau **HTV** est un matériau réalisé principalement à base de bronze ou de cuivre ou d'aluminium et structuré sous la forme d'un réseau de fils métalliques conducteurs électriquement ou d'un métal déployé ou d'un clinquant métallique, et le matériau **BTV** est un matériau réalisé principalement à base de zinc.

Dans une forme de réalisation de la couche de métallisation, le matériau **BTV** est situé sur tout ou partie d'une surface du matériau **HTV,** entre le matériau **HTV** et la couche de peinture de protection pour favoriser l'élimination locale de la peinture de protection et ou entre le matériau **HTV** et la structure en matériau composite pour favoriser le décollement partiel de la couche de matériau **HTV** autour du point d'impact de la foudre.

Dans une forme préférée de réalisation de la pièce la densité surfacique du matériau **BTV** est localement, en moyenne, compris entre 10% et 50% de la densité surfacique locale moyenne de la couche de métallisation pour obtenir un effet mécanique de la vaporisation apte à décoller la peinture et ou le matériau **HTV** dans la zone de l'impact de foudre, et dans un soucis d'optimisation de la masse de la métallisation, la conductivité cumulée des matériaux électriquement conducteur de la couche de métallisation est prise en compte pour satisfaire les exigences de conductivité électrique de la couche de métallisation, condition généralement moins contraignante que la protection contre l'effet direct de l'impact de foudre dont l'invention améliore l'efficacité.

Avantageusement la couche de métallisation résultante est de densité surfacique comprise entre 50 et 350 g/m2.

La présente invention concerne également une structure d'aéronef incorporant une ou plusieurs pièces métallisées suivant le principe décrit.

Une telle structure d'aéronef est par exemple un sous-ensemble de l'aéronef tel qu'un fuselage ou une partie de fuselage d'un avion ou encore des parties d'ailes ou d'empennages.

Les pièces peuvent être assemblées entre elles pour former un sous-ensemble complexe de l'aéronef dont la structure composite est alors protégée de manière améliorée contre les effets de la foudre et une pièce ou un sous-ensemble est le cas échéant assemblé à d'autres structures dudit aéronef, par exemple des structures métalliques ou des structures composite n'ayant pas les exigences de métallisation des pièces conformes à l'invention.

La description détaillée d'exemples de réalisation de l'invention est faite en référence aux figures qui représentent schématiquement :
- Figure 1 :: déjà citée, en coupe suivant l'épaisseur une zone d'une pièce en matériau composite métallisée suivant une technique connue ayant subit un impact de foudre ;
- Figure 2 :: en coupe suivant l'épaisseur une zone d'une pièce en matériau composite métallisée suivant un mode de réalisation de l'invention ayant subit un impact de foudre ;
- Figure 3 :: en coupe suivant l'épaisseur une zone d'une pièce en matériau composite métallisée suivant un mode différent de réalisation de l'invention ayant subit un impact de foudre.

Sur les figures 1, 2 et 3 des parties similaires de la pièce sont repérées par des repères identiques.

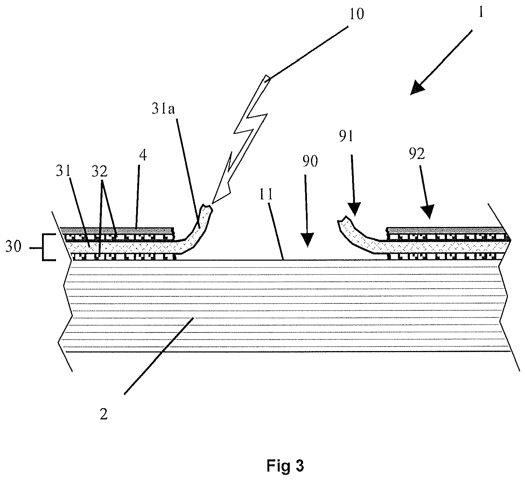

Une pièce 1 en matériau composite suivant l'invention comporte principalement, comme illustrée en coupe sur les figures 2 et 3, une partie structurale 2 comportant des fibres minérales ou organiques maintenues dans une matrice dure organique.

Une telle partie structurale 2 est connue en particulier dans les applications aéronautiques pour lesquelles un rapport résistance structurale sur masse de structure favorable est recherché.

Par exemple une telle structure comporte un empilage de plis de fibres de verre, kevlar® ou carbone, tissées ou unidirectionnelles, maintenues dans une matrice d'un matériau polymère tel qu'une résine époxy.

Dans un autre mode de réalisation non représenté, adapté aux structures moins chargées comme par exemple des carénages, la structure comporte suivant son épaisseur une structure alvéolaire, mousse ou nid d'abeille par exemple, entre deux revêtements réalisés par des fibres maintenues dans une matrice.

De manière également connue, la structure 2 est conformée à la forme de la pièce 1, par exemple au cours d'un processus de formage avant durcissement par polymérisation du matériau de la matrice, cas des matrices dite thermodurcissables, ou au cours d'un processus de formage à une température pour laquelle la matrice est dans un état plastique, cas des matrices thermoplastiques.

Suivant les cas une telle pièce 1 comporte des parties métalliques, non représentées, telles que des inserts ou des renforts et ou des perçages en particulier pour des besoins de fixation de la pièce.

Une telle pièce 1 est par exemple une pièce dite structurale soumise à des efforts importants, du même ordre en conditions limites que la résistance structurale de la pièce, par exemple un panneau de fuselage ou de voilure d'avion, ou bien une pièce dite secondaire telle qu'un carénage, par exemple un carénage de raccordement entre l'aile et le fuselage d'un avion.

La pièce 1 comporte en outre, sur une surface 11 de la pièce sur laquelle des charges électriques sont susceptibles de s'accumuler et ou un arc électrique, notamment lié à la foudre, est susceptible de se produire, une couche de surface dite de métallisation 30, couche de métallisation elle-même recouverte par une peinture de finition 4.

La surface 11 portant ladite couche de métallisation 30 est dite surface protégée. Dans le cas des aéronefs elle correspond en particulier à la surface de la pièce 1 d'un côté extérieur de l'aéronef, c'est à dire la surface soumise à l'écoulement aérodynamique et potentiellement à des impacts de foudre 10.

Suivant l'invention, la couche de métallisation 30 comporte au moins deux matériaux métalliques 31, 32, électriquement conducteurs ayant des températures de vaporisation sensiblement différentes, pouvant être en pratique très différentes, au moins une couche d'au moins un matériau électriquement conducteur 32 de plus basse température de vaporisation **Θb,** dit conducteur **BTV,** étant localisé dans la couche de métallisation 30 de sorte que des vapeurs du matériau **BTV** 32 soit en mesure, sous l'effet d'une expansion explosive des dites vapeurs, de provoquer un arrachement local de la peinture de protection 4 alors qu'une partie de la couche du matériau électriquement conducteur 31 de plus haute température de vaporisation **Θh,** dit conducteur **HTV,** non vaporisée et découverte de peinture de protection, reste présente sur une partie de la structure.

Un tel résultat est obtenu, comme schématisé sur la figure 2, en déposant la métallisation 30 lors de la réalisation de la pièce 1 de sorte que le matériau **BTV** 32 se trouve sur la pièce réalisée sous la couche de peinture 4, entre la couche du matériau **HTV** 31 et la couche de peinture 4.

Cependant cette représentation schématique n'est pas strictement imposée lorsqu'en particulier la couche de matériau **HTV** 31 est réalisée au moyen d'un réseau de fils métalliques ou d'un grillage en métal déployé et que les vapeurs de matériau **BTV** 32 sont en mesure de traverser la couche de matériau **HTV** 31 par les nombreux trous de ladite couche de matériau **HTV.**

Le matériau conducteur **HTV** 31 est typiquement un matériau similaire aux matériaux mis en oeuvre pour la réalisation des métallisations conventionnelles avec une température de vaporisation **Θh** comprise entre 2500 Kelvin et 3000 Kelvin.

La couche de matériaux conducteur **HTV** 31 se présente par exemple sous la forme d'un grillage de bronze ou de cuivre ou d'un alliage à base de cuivre ou encore, si les problèmes de corrosion sont évités, sous la forme d'un grillage ou d'un clinquant d'aluminium ou d'un alliage d'aluminium, ces divers matériaux ayant des températures de vaporisation **Θh** de l'ordre de 2800 Kelvin.

Le matériau conducteur **BTV** 32 présente avantageusement une température de vaporisation **Θb** inférieure à environ 70%, et de préférence inférieure à 50%, de la température de vaporisation **Θh** du matériau conducteur **HTV** 31, c'est à dire en pratique une température de vaporisation inférieure à 2000 Kelvin.

Divers matériaux métalliques, par exemple le plomb ou le zinc, répondent à cette condition.

Toutefois en pratique, le matériau conducteur **BTV** 32 doit également répondre à diverses conditions de mise en oeuvre comme sa compatibilité avec le matériau **HTV** 31 et répondre aux divers critères, en particulier de toxicité, qui s'imposent aux productions industrielles.

Avantageusement le matériau conducteur **BTV** 32 est un alliage à base zinc ou du zinc Zn dont la température de vaporisation **Θb** est de 1180 Kelvin et qui présente l'avantage d'être compatible d'un dépôt industriel sur du bronze, du cuivre ou de l'aluminium.

Le zinc, dont les qualités connues de protection contre les phénomènes de corrosion sont susceptibles d'être exploitées dans le cadre de l'invention pour protéger le matériau **HTV** 31 de risques de corrosion, comme par exemple dans une association d'une métallisation à base d'aluminium comme matériau **HTV** sur un composite comportant des fibres de carbone, est déposé par une technique conventionnelle telle que le zingage par trempe au zinc à l'état liquide, par dépôt électrolytique, par projection, par peinture au zinc ...

Les caractéristiques de la couche de métallisation 30, en particulier sa structure et sa densité surfacique moyenne, sont déterminées en mettant en oeuvre les méthodes connues de métallisation de matériaux composites.

En pratique une densité surfacique moyenne de métallisation est comprise entre environ 50 g/m2 et 350 g/m2 pour assurer une protection acceptable contre les effets de la foudre avec les matériaux métalliques cités.

La densité surfacique propre de la couche de matériau **BTV** 32 varie en fonction de l'efficacité recherchée qui est notamment conditionnée par la solidité de la couche de peinture liée entre autre à son épaisseur. Des densités de matériaux **BTV** comprises entre 10% et 30% de celle de la couche de métallisation 30, c'est à dire des densités surfaciques comprises environ entre 10 et 100 g/m2, sont de préférence mises en oeuvre, des valeurs adaptées précises étant avantageusement confirmées expérimentalement.

En améliorant le comportement de la pièce 1 vis à vis des dommages directs de la foudre, c'est à dire des effets mécaniques de la foudre à proximité du point d'impact, l'invention permet de diminuer la masse totale de métallisation 30 par rapport à une solution conventionnelle, au moins dans des zones des pièces pour lesquelles les exigences de conduction électriques de la métallisation vis à vis des effets indirects de la foudre pour disperser des courants de foudre s'avèrent moins contraignantes, ce qui est le cas le plus général des pièces d'un avion.

Suivant un premier mode de réalisation correspondant à la pièce illustrée schématiquement sur la figure 2, le matériau **BTV** 32 est déposé sur une face de la couche caractéristique du matériau **HTV** 31 située du côté de la couche de peinture de protection 4.

Dans ce cas la vaporisation du matériau **BTV** 32 lors d'un impact de foudre conduit localement à une élimination de la peinture sans effet significatif sur le matériau **HTV** 31 qui n'est pas vaporisé.

Suivant un second mode de réalisation, non représenté, le matériau **BTV** 32 est déposé sur la structure composite 2 ou sur le matériau **HTV** 31 entre ladite structure composite et le matériau **HTV** 31.

Dans ce cas la vaporisation du matériau **BTV** 32 lors d'un impact de foudre conduit localement à un décollement de la métallisation en matériau **HTV** 31 qui est partiellement soulevée par rapport à la structure composite 2.

Le matériau HTV 31 ainsi soulevé favorise l'attachement du pied d'arc de foudre sur le dit matériau par effets de pointes.

La combinaison de ces deux modes de réalisation, solution illustrée schématiquement sur la figure 3, conduit, même lorsque les vapeurs de matériau **BTV** ne traversent pas la couche du matériau **HTV**, à un décollement local 31a du matériau **HTV** 31 lui-même non recouvert de peinture de protection.

En pratique lors d'un processus de la réalisation de la pièce 1 les couches de matériaux **HTV** et **BTV** peuvent être déposées successivement de sorte à respecter leurs emplacements respectifs recherchés sur la structure composite 2, par exemple, dans le mode de réalisation correspondant à l'illustration de la figure 2 et pour un ordre d'empilage des couches successives commençant par les couches structurales, par une opération de dépôt d'un grillage ou d'un clinquant en matériau **HTV** sur la structure 2 suivi d'une opération de dépôt d'un grillage en matériau **BTV** sur la couche en matériau **HTV**.

Suivant un autre mode de réalisation de la pièce 1, la couche de métallisation est préparée séparément en déposant une couche de matériau **BTV** sur une couche de matériau **HTV**, par exemple par un zingage d'un grillage en bronze ou en cuivre, et la couche de métallisation complexe ainsi préparée est déposée sur la structure 2 suivant une méthode de métallisation conventionnelle.

Dans cet autre exemple de mode de réalisation, le zingage est avantageusement réalisé, par facilité industrielle, sur les deux faces du grillage ce qui conduit à une métallisation telle que celle de la pièce illustrée schématiquement sur la figure 3.

Lorsqu'une pièce 1 métallisée suivant l'invention est soumise à un impact de foudre, la température atteint localement à proximité de l'impact des valeurs très élevées, dépassant 2500 Kelvin, par effet joule en raison des forts courants induits dans la couche de métallisation 30 par la foudre ayant localement traversée la peinture extérieure.

Autour du point d'impact, l'intensité du courant de foudre diminue progressivement en fonction de la distance au point d'impact théorique en raison de l'augmentation de la section conductrice électriquement de la métallisation, qui augmente comme la distance au point d'impact, et la température diminue donc également en fonction de la distance au point d'impact théorique.

Du fait de la diminution de température avec la distance au point d'impact, trois zones sont déterminables autour du point d'impact :
- une première zone 90 à proximité immédiate du point d'impact correspond à une surface de la pièce à l'intérieur de laquelle la température a atteint ou dépassé la température de vaporisation **Θh** du matériau **HTV** ,
- une seconde zone 91 entourant la première zone correspond à une surface à l'intérieure de laquelle la température a été inférieure à la température de vaporisation **Θh** du matériau **HTV** mais supérieure ou égale à la température **Θb** de vaporisation du matériau **BTV** ;
- une troisième zone 92 autour de la seconde zone correspond à une surface pour laquelle la température de vaporisation **Θb** du matériau **BTV** n'a pas été atteinte.

Ces trois zones sont théoriquement concentriques mais en pratique leurs formes et leurs dimensions sont plus ou moins irrégulières en raison de la grande sensibilité des phénomènes liés à la foudre à de nombreux paramètres tels que la forme de la pièce, des défauts locaux à proximité du point d'impact, des caractéristiques de l'écoulement aérodynamique, le profil du courant de foudre, la dispersion du pied d'arc...

Quelle que soit la géométrie réelle des différentes zones après un impact de foudre, ces différentes zones sont observables du fait que
- dans la troisième zone 92 la peinture de protection 4 est toujours présente et recouvre la métallisation 30 intacte ;
- dans la seconde zone 91 la température atteinte a provoqué la vaporisation du matériau électriquement conducteur **BTV** 32 ayant fait disparaître la couche de peinture de protection 4 et ou décollé le matériau **HTV** 31 de la structure composite 2, mais la couche de matériau électriquement conducteur **HTV** 31 est toujours présente ;
   - dans la première zone 90 la température atteinte a provoqué la vaporisation du matériau électriquement conducteur **BTV** 32 et donc également du matériau électriquement conducteur **HTV** 31, la couche de peinture 4 a donc également disparu, et le matériau composite 2 de la pièce se trouve à nu sans métallisation et sans peinture de protection.

Si l'impact de foudre est d'intensité réduite, il est possible que la température atteinte à proximité du point d'**imp**act n'atteigne pas la température de vaporisation du matéria**u HTV** 31. Dans ce cas la peinture sera localement éliminée, zone 91, mais sans que ne soit créée une zone 90 dépourvue de métallisation, la pièce restant protégée.

L'invention a donc pour effet de créer la seconde zone 91 qui permet, lors de l'impact foudre, de maintenir l'arc de foudre, dont la position du pied est particulièrement instable, attaché sur la métallisation 30, plus particulièrement sur le matériau métallique **HTV** 31 toujours présent dans la dite zone.

La zone totale balayée par le pied d'arc, c'est à dire les première 90 et seconde 91 zones, est plus étendue que dans une solution de métallisation conventionnelle et la quantité de matériau HTV 31 vaporisée est plus importante ce qui atténue les effets de l'impact de foudre.

De fait l'arc de foudre ne peut s'attacher sur le matériau composite à nu de la zone 90, ce qui permet d'éviter un endommagement du matériau composite au niveau de la zone 90.

Les pièces de l'invention sont avantageusement incorporées dans des structures d'aéronefs telles que des structures de fuselage, d'aile ou d'empennages, en particulier dans les parties des structures pour lesquelles les risques d'impacts de foudre sont élevés ou pour lesquelles les conséquences des effets sont jugées critiques, qui sont alors protégées contre la foudre avec une efficacité améliorée.

## Revendications

1. Pièce (1) comportant une partie structurale en matériau composite (2), comportant des fibres minérales ou organiques maintenues dans une matrice organique à l'état durci, et comportant, sur une surface (11) de ladite partie structurale, au moins sur un côté de ladite pièce susceptible d'être soumise à des impacts de foudre (10), une couche de métallisation (30) comportant une couche d'un premier matériau métallique (31) électriquement conducteur, ladite couche de métallisation étant recouverte d'une peinture de protection (4) électriquement isolante, **caractérisé en ce que** la couche de métallisation (30) comporte au moins un second matériau métallique (32) électriquement conducteur, dit matériau **BTV,** dont la température de vaporisation **Θb** est inférieure à la température de vaporisation **Θh** du premier matériau métallique (31) électriquement conducteur, dit matériau **HTV.**

2. Pièce suivant la revendication 1 dans laquelle la température de vaporisation **Θb** est inférieure à 70 % de la température de vaporisation **Θh.**

3. Pièce suivant la revendication 2 dans laquelle la température de vaporisation **Θb** est inférieure à 50 % de la température de vaporisation **Θh.**

4. Pièce suivant la revendication 3 dans laquelle la température de vaporisation **Θb** est inférieure à 1250 Kelvin et la température de vaporisation **Θh** est supérieure à 2500 Kelvin.

5. Pièce suivant la revendication 4 dans laquelle le matériau **HTV** (31) est principalement du bronze ou du cuivre ou de l'aluminium.

6. Pièce suivant la revendication 5 dans laquelle le matériau **HTV** (31) est structuré sous la forme d'un réseau de fils métalliques conducteurs électriquement ou d'un métal déployé ou d'un clinquant métallique.

7. Pièce suivant la revendication 6 dans laquelle le matériau **BTV** (32) est du zinc ou un alliage à base de zinc.

8. Pièce suivant la revendication 7 dans laquelle le matériau **BTV** (32) est situé sur tout ou partie d'une surface du matériau **HTV** (31).

9. Pièce suivant la revendication 8 dans laquelle le matériau **BTV** (32) est situé essentiellement sur tout ou partie d'une surface du matériau **HTV** (31) entre le matériau **HTV** et la couche de peinture de protection (4).

10. Pièce suivant la revendication 8 dans laquelle le matériau **BTV** (32) est situé essentiellement sur tout ou partie d'une surface du matériau **HTV** (31) entre le matériau composite (2) et le matériau **HTV** (31).

11. Pièce suivant la revendication 8 dans laquelle du matériau **BTV** (32) est réparti d'une part entre le matériau **HTV** (31) et la peinture de protection (4) et d'autre part entre le matériau **HTV** (31) et le matériau composite (2).

12. Pièce suivant l'une des revendications précédentes dans lequel la densité surfacique moyenne du matériau **BTV** (32) est localement comprise entre 10% et 30% de la densité surfacique locale moyenne de la métallisation (30).

13. Pièce suivant la revendication 12 dans lequel la densité surfacique de la couche de métallisation (30) est comprise entre 50 et 350 g/m2.

14. Structure d'aéronef comportant une ou plusieurs pièces (1) conforment à l'une des revendications précédentes assemblées entre elles et ou à des structures dudit aéronef.

## Patentansprüche

1. Teil (1), umfassend einen Strukturabschnitt aus Verbundstoff (2), umfassend mineralische oder organische Fasern, die in einer organischen Matrix im gehärteten Zustand gehalten werden, und umfassend auf einer Fläche (11) des Strukturabschnitts mindestens auf einer Seite des Teils, das geeignet ist, Blitzeinschlägen (10) ausgesetzt zu sein, eine Metallisierungsschicht (30), umfassend eine Schicht aus einem ersten elektrisch leitenden metallischen Material (31), wobei die Metallisierungsschicht von einem ersten elektrisch isolierenden Schutzanstrich (4) bedeckt ist, **dadurch gekennzeichnet, dass** die Metallisierungsschicht (30) mindestens ein zweites elektrisch leitendes metallisches Material (32), BTV-Material genannt, umfasst, dessen Verdampfungstemperatur θb niedriger als die Verdampfungstemperatur θh des ersten elektrisch leitenden metallischen Materials (31), HTV-Material genannt, ist.

2. Teil nach Anspruch 1, bei dem die Verdampfungstemperatur θb niedriger als 70 % der Verdampfungstemperatur θh ist.

3. Teil nach Anspruch 2, bei dem die Verdampfungstemperatur θb niedriger als 50 % der Verdampfungstemperatur θh ist.

4. Teil nach Anspruch 3, bei dem die Verdampfungstemperatur θb niedriger als 1250 Kelvin und die Verdampfungstemperatur θh höher als 2500 Kelvin ist.

5. Teil nach Anspruch 4, bei dem das HTV-Material (31) hauptsächlich Bronze oder Kupfer oder Aluminium ist.

6. Teil nach Anspruch 5, bei dem das HTV-Material (31) in Form eines Netzes von elektrisch leitenden Metalldrähten oder eines Streckmetalls oder einer Metallfolie strukturiert ist.

7. Teil nach Anspruch 6, bei dem das BTV-Material (32) Zink oder eine Legierung auf Basis von Zink ist.

8. Teil nach Anspruch 7, bei dem das BTV-Material (32) auf der gesamten Fläche des HTV-Materials (31) oder einem Teil davon angeordnet ist.

9. Teil nach Anspruch 8, bei dem das BTV-Material (32) im Wesentlichen auf der gesamten Fläche des HTV-Materials (31) oder einem Teil davon zwischen dem HTV-Material und der Schutzanstrichschicht (4) angeordnet ist.

10. Teil nach Anspruch 8, bei dem das BTV-Material (32) im Wesentlichen auf der gesamten Fläche des HTV-Materials (31) oder einem Teil davon zwischen dem Verbundstoff (2) und dem HTV-Material (31) angeordnet ist.

11. Teil nach Anspruch 8, bei dem BTV-Material (32) einerseits zwischen dem HTV-Material (31) und dem Schutzanstrich (4) und andererseits zwischen dem HTV-Material (31) und dem Verbundstoff (2) verteilt ist.

12. Teil nach einem der vorhergehenden Ansprüche, bei dem die durchschnittliche Flächendichte des BTV-Materials (32) lokal zwischen 10 % und 30 % der durchschnittlichen lokalen Flächendichte der Metallisierung (30) umfasst.

13. Teil nach Anspruch 12, bei dem die Flächendichte der Metallisierungsschicht (30) zwischen 50 und 350 g/m² umfasst.

14. Flugzeugstruktur, umfassend ein oder mehrere Teile (1) nach einem der vorhergehenden Ansprüche, die miteinander oder mit Strukturen des Flugzeugs verbunden sind.

## Claims

1. Component (1) comprising a structural part made of a composite (2) comprising organic or inorganic fibers held in an organic matrix in the hardened state, and comprising, on a surface (11) of said structural part, at least on a side of said component liable to be struck by lightning (10), a metallization layer (30) comprising a layer of a first electrically conductive metallic material (31), said metallization layer being covered with an electrically insulating protective paint (4), **characterized in that** the metallization layer (30) comprises at least a second electrically conductive metallic material (32), called **LVT** material, the vaporization temperature **Θl** of which is below the vaporization temperature **Θh** of the first electrically conductive metallic material (31), called **HVT** material.

2. Component according to Claim 1, in which the vaporization temperature **Θl** is below 70% of the vaporization temperature **Θh.**

3. Component according to Claim 2, in which the vaporization temperature Θl is below 50% of the vaporization temperature **Θh.**

4. Component according to Claim 3, in which the vaporization temperature **Θl** is below 1250 kelvin and the vaporization temperature Θh is above 2500 kelvin.

5. Component according to Claim 4, in which the **HVT** material (31) is mainly bronze, copper or aluminum.

6. Component according to Claim 5, in which the **HVT** material (31) is structured in the form of a network of electrically conductive, metallic wires or of an expanded metal or of a metallic foil.

7. Component according to Claim 6, in which the **LVT** material (32) is zinc or a zinc-based alloy.

8. Component according to Claim 7, in which the **LVT** material (32) is located on all or some of one surface of the **HVT** material (31).

9. Component according to Claim 8, in which the **LVT** material (32) is located essentially on all or some of one surface of the **HVT** material (31) between the **HVT** material and the protective coat of paint (4).

10. Component according to Claim 8, in which the **LVT** material (32) is located essentially on all or some of one surface of the **HVT** material (31) between the composite (2) and the **HVT** material (31).

11. Component according to Claim 8, in which the **LVT** material (32) is located on the one hand between the **HVT** material (31) and the protective paint (4) and on the other hand between the **HVT** material (31) and the composite (2).

12. Component according to one of the preceding claims, in which the average area density of the **LVT** material (32) is locally between 10% and 30% of the average local area density of the metallization (30).

13. Component according to claim 12, in which the mass per unit area of the metallization layer (30) lies between 50 and 350 g/m².

14. Aircraft structure comprising one or more components (1), according to one of the preceding claims, assembled with one another and/or with structures of said aircraft.
